# EUROPÄISCHE PATENTSCHRIFT

(11) **EP 0 795 582 B1**
(45) Veröffentlichungstag und Bekanntmachung des Hinweises auf die Patenterteilung: **29.09.1999**
(21) Anmeldenummer: 97104453.2
(22) Anmeldetag: 15.03.1997
(51) Int. Cl.: C08L 21/00, C08L 5/04, B60C 1/00

(54) **Kautschukmischung für Reifen**
Rubber composition for tires
Composition de caoutchouc pour pneumatiques

(30) Priorität: 16.03.1996 DE 19610375
(43) Veröffentlichungstag der Anmeldung: 17.09.1997
(73) Patentinhaber: Continental Aktiengesellschaft, 30165 Hannover (DE)
(72) Erfinder: Loreth, Wolfgang, Dr., 31867 Lauenau (DE)

(56) Entgegenhaltungen:
- GB-A- 312 644
- US-A- 3 802 478

## Beschreibung

Die vorliegende Erfindung betrifft eine Kautschukmischung für den Laufstreifen eines Reifens, insbesondere eines Winterreifens. Die Erfindung betrifft ferner einen Reifen mit einem Laufstreifen, der zumindest zum Teil aus dieser Kautschukmischung hergestellt ist.

Aus dem einschlägigen Stand der Technik, insbesondere auch aus veröffentlichten Patentdokumenten, ist eine Vielzahl von Vorschlägen bekannt, die sich damit befassen, Kautschukmischungen für Laufstreifen unterschiedliche Materialien beizumengen, um die Wintereigenschaften der Reifen, wie beispielsweise Traktionsverhalten und Bremseigenschaften auf schneeigem und eisigem Untergrund oder auch den Naßgriff, zu verbessern. Insbesondere wurde auch die Beimengung von in der Natur vorkommenden Materialien pflanzlichen oder tierischen Ursprungs, was in jüngster Vergangenheit aufgrund der Umweltverträglichkeit und der Ungiftigkeit solcher Materialien zunehmend an Bedeutung gewinnt, vorgeschlagen.

So ist es etwa aus der DE-A 4005493 bekannte, einer Kautschukmischung, die für Laufstreifen vom Winterreifen besonders geeignet sein soll, Lederpulver oder Gelatinepulver beizumengen. Gelatine ist eine wasserlösliche Substanz, die in eine Kautschukmischung schwierig einzuarbeiten ist und als nicht kautschukfreundlich einzustufen ist. Leder besitzt einen gewissen Wassergehalt, ist ein hydrophiles Material und wasserquellbar und somit ebenfalls wenig kautschukfreundlich. Sowohl bei Gelatine als auch bei Leder hat sich herausgestellt, daß sich solche Materialien relativ leicht aus der Oberfläche von Reifenlaufstreifen lösen, was die Wirksamkeit dieser Materialien einschränkt und auch die Abriebsbeständigkeit der Laufstreifen verschlechtert.

Aus der noch nicht veröffentlichten europäischen Patentanmeldung Nr. 96890017.5 ist es weiters bekannt, der Kautschukmischung für den Laufstreifen eines Winterreifens Keratin in Form von Fasern oder Pulver beizumengen. Als Keratinfasern kommen dabei insbesondere Tierhaare bzw. Tierborsten in Frage. Die Wintereigenschaften einer Laufstreifenmischung können durch die Beimengung von Keratinfasern oder Keratinpulver, insbesondere was die Griffeigenschaften, beispielsweise Traktion auf Schnee und Bremsen auf Schnee und Eis betrifft, deutlich verbessert werden.

Die der gegenständlichen Erfindung zugrundeliegende Aufgabe besteht nun darin, die Wintereigenschaften, insbesondere was Schnee- und Eisgriff betrifft, von Laufstreifenmischungen unter Beimengung natürlicher, somit umweltverträglicher und toxikologisch unbedenklicher Materialien, noch weiter zu verbessern. Dabei sollen die anderen erwünschten Eigenschaften von Laufstreifen, beispielsweise das Abriebsverhalten oder der Rollwiderstand, etwa gleich gut erhalten bleiben.

Gelöst wird die gestellte Aufgabe erfindungsgemäß dadurch, daß der Kautschukmischung ein Fasergemisch bestehend aus Cellulosefasern und Keratinfasern in einem Gewichtsverhältnis im Bereich von 1 : 5 bis 5 : 1, insbesondere 3 : 7 bis 2 : 1, beigemengt ist.

Überraschenderweise wurde festgestellt, daß die Beimengung eines erfindungsgemäßen Fasergemisches die Wintereigenschaften einer Laufstreifenmischung, besonders deutlich Griff-, Traktions- und Bremsverhalten auf schneeigem oder eisigem Untergrund, signifikant verbessern hilft. Keratin als hydrophobes und auch kautschukfreundliches Material dürfte dabei eine Mikrorauhigkeit der Laufstreifenoberfläche bewirken, die sich günstig auf die genannten Eigenschaften auswirkt. Cellulose ist eine hygroskopische Substanz, die in der Laufstreifenmischung enthaltene Cellulose dürfte in Wechselwirkung mit dem sich etwa beim Bremsen oder Beschleunigen auf eisigem oder schneeigem Untergrund zwischen Reifenprofil und Untergrund bildenden dünnen Wasserfilm treten, wodurch die Rutschfestigkeit erhöht wird. Zudem wurde festgestellt, daß durch die Beimengung eines erfindungsgemäßen Fasergemisches andere Reifen- bzw. Profileigenschaften, wie beispielsweise die Abriebsbeständigkeit, nicht beeinträchtigt wurden.

An dieser Stelle wird erwähnt, daß unter dem Begriff Keratinfasern und Cellulosefasern insbesondere solche Fasern zu verstehen sind, die Keratine oder Cellulose als eine ihrer wesentlichen Komponenten beinhalten.

Die erwähnte Eigenschaftsverbesserung ist insbesondere dann in einem deutlich merkbaren Bereich, wenn der Anteil des Fasergemisches 2 bis 25 Gewichtsteile, insbesondere 5 bis 15 Gewichtsteile, bezogen auf 100 Gewichtsteile Kautschuk in der Mischung, beträgt.

Gemäß einer bevorzugten Ausführungsform der Erfindung werden als Keratinfasern Wollfasern, Haare, insbesondere Tierhaare oder Tierborsten, beigemengt. Diese in der Natur vorkommenden Materialien stehen in ausreichender Menge zur Verfügung, wobei Schafwolle oder Schweineborsten sich als recht gut geeignete Materialien erwiesen haben. Solche Keratinfasern fallen oft auch als Produktionsabfall bei der Herstellung verschiedenster Produkte an, der Einsatz solcher Fasern ist daher besonders umweltfreundlich und auch kostengünstig.

Als Cellulosefasern sind beispielsweise Kokosfasern oder Baumwollfasern gut geeignet. Auch hier können diverse Produktionsabfälle verwendet werden.

Die Fasern, und zwar sowohl die Keratin- als auch die Cellulosefasern werden weiters bevorzugt in einer Länge von 0,5 bis 30 mm, insbesondere von 5 bis 10 mm, der Kautschukmischung beigemengt, was eine gute Verarbeitbarkeit der Mischung gewährleistet. Dabei kann das Fasergemisch auch Fasern unterschiedlicher Länge beinhalten. Auch die Beimischung von Keratin- und Cellulosefasern unterschiedlicher Herkunft ist möglich.

Die vorliegende Erfindung betrifft ferner einen Reifen, dessen Laufstreifen zumindest zum Teil aus der vulkanisierten erfindungsgemäßen Kautschukmischung besteht.

Die Erfindung wird nun anhand von Ausführungsbeispielen, die in der Tabelle 1 zusammengefaßt sind, näher beschrieben.

Die Tabelle enthält mehrere Mischungsbeispiele, und zwar eine Basismischung, die keine Fasern enthielt, eine Versuchsmischung 1, die als Fasern lediglich Keratinfasern, und zwar Schweineborsten, enthielt, eine Versuchsmischung 2, die nur Cellulosefasern, und zwar Kokosfasern, enthielt, und eine Mischung, die ein erfindungsgemäßes Fasergemisch enthielt. Die in der Tabelle angegebenen Zahlenwerte sind Gewichtsteile, die jeweils auf 100 Gewichtsteile Kautschuk in der Mischung bezogen sind.

In sämtlichen Mischungsbeispielen wurde ein übereinstimmender Polymerverschnitt, und zwar aus Naturkautschuk und Styrolbutadienkautschuk eingesetzt.

Die Kautschukkomponente in der Laufstreifenmischung kann davon abweichend gewählt werden, wird aber mindestens ein Polymer aus folgender Gruppe beinhalten: Naturkautschuk, Polyisoprenkautschuk, Cis- oder Vinylpolybutadienkautschuk, Styrolbutadienkautschuk, in Emulsion oder in Lösung hergestellt, oder Gemische aus diesen, wobei ferner Zusätze von Butylkautschuk oder 3, 4-Isoprenkautschuk möglich sind. Weiters waren in sämtlichen Kautschukmischungen die üblichen Mengen an Ruß, Alterungsschutzmittel, Vulkanisationschemikalien, Zinkweiß, Stearinsäure, Verarbeitungshilfsmittel, Schwefel und dergleichen enthalten. Dabei enthielten jene Mischungen, welchen Fasern beigemengt wurden, einen etwas geringeren Rußanteil als die Basismischung. Erwähnt sei ferner, daß in der Kautschukmischung als Füllstoff nicht nur Ruß, sondern auch Ruß gemeinsam mit anderen Füllstoffen, beispielsweise Kieselsäure eingesetzt werden kann. Auch ein kompletter Ersatz des Rußanteiles durch Kieselsäure ist möglich.

Aus allen Mischungsrezepturen wurden Laborproben erstellt und einigen Labortests unterzogen. Dabei wurden folgende Meßverfahren angewandt:
- Shore Härte: gemäß DIN 53 505 bei Raumtemperatur
- Rückprallelastizität: gemäß DIN 53 512
- E' (-20 °C) (Dynamischer Speichermodul) und tan δ bei 0 °C: gemessen an einem "Eplexor" der Firma GADUM (Frequenz 10 Hz kraftkonstant, statische Spannung 0,64 MP, dynamische Spannung +/- 0,38 MP), zylindrischer Prüfkörper mit 10 mm Durchmesser und 10 mm Höhe
- DIN-Abrieb: gemäß DIN 53 516
- Skid Eis: Die Skid-Messungen wurden auf einem British Portable Skid Tester (BPST) bei -5 °C durchgeführt

Mit sämtlichen Mischungsrezepturen wurden Laufstreifenmischungen erstellt und bei der Herstellung von PKW-Reifen der Dimension 185/60R14 eingesetzt. Diese Reifen wurden bezüglich Schneetraktion, Eis- und Naßbremsen jeweils auf einem Fahrzeug mit einem Antiblockiersystem geprüft.

Die angegebenen Zahlenwerte sind Kennzahlen, die sich jeweils auf die Basismischung, deren Testwerte 100 gesetzt wurden, beziehen, wobei Werte > 100 eine Verbesserung bedeuten.

Aus den Reifentestergebnissen ist zu ersehen, daß der Reifen mit der erfindungsgemäßen Laufstreifenmischung sowohl gegenüber jenen Reifen, die in der Laufstreifenmischung die Versuchsmischung 1 oder die Versuchsmischung 2 enthielten, als auch gegenüber jenem Reifen, dessen Laufstreifenmischung nach der Basismischung aufgebaut war, eine signifikante Verbesserung, vor allem bei Schneetraktion und Eisbremsen zeigte.

| | Basismischung | Versuchsmischung 1 | Versuchsmischung 2 | Mischung gemäß Erfindung |
|---|---|---|---|---|
| NR | 70 | < | < | < |
| SBR (Buna SL 704) | 30 | < | < | < |
| N234 | 74 | 69 | 72 | 70 |
| Mineralöl | 40 | 45 | 41 | 45 |
| Borsten | - | 10 | - | 7 |
| Fasern | - | - | 10 | 3 |
| ASM | 4 | < | < | < |
| Aktivator | 3 | < | < | < |
| Beschleuniger | 2 | 1,6 | 1,8 | < |
| Schwefel | 2 | 1,6 | 1,7 | < |
| Shore Härte | 61 | 62 | 61 | 60 |
| Rückprallelastizität RT | 31 | 32 | 35 | 33 |
| Rückprallelastizität 70 °C | 45 | 48 | 49 | 48 |
| Skid Eis (BPST, -5 °C % zu Basismischung) | 100 | 107 | 105 | 110 |
| E' (-20 °C) | 29,2 | 22,7 | 20,9 | 18,1 |
| tan δ (0 °C) | 0,44 | 0,41 | 0,42 | 0,42 |
| DIN-Abrieb | 90 | 105 | 111 | 101 |

| **Reifenergebnisse** | | | | |
|---|---|---|---|---|
| Schneetraktion | 100 | 102 | 105 | 112 |
| Eisbremsen | 100 | 107 | 105 | 108 |
| Naßbremsen | 100 | 97 | 98 | 100 |

## Patentansprüche

1. Kautschukmischung für den Laufstreifen eines Reifens,
**dadurch gekennzeichnet**,
daß der Kautschukmischung ein Fasergemisch, bestehend aus Cellulosefasern und Keratinfasern in einem Gewichtsverhältnis im Bereich von 1:5 bis 5:1 beigemengt ist.

2. Kautschukmischung nach Anspruch 1, dadurch gekennzeichnet, daß der Kautschukmischung ein Fasergemisch, bestehend aus Cellulosefasern und Keratinfasern in einem Gewichtsverhältnis im Bereich von 3:7 bis 2:1 beigemengt ist.

3. Kautschukmischung nach Anspruch 1 oder 2, dadurch gekennzeichnet, daß der Anteil des Fasergemisches 2 bis 25 Gewichtsteile, insbesondere 5 bis 15 Gewichtsteile, bezogen auf 100 Gewichtsteile Kautschuk in der Mischung beträgt.

4. Kautschukmischung nach zumindest einem der vorhergehenden Ansprüche, dadurch gekennzeichnet, daß die Keratinfasern Wollfasern, Haare, insbesondere Tierhaare oder Tierborsten, sind.

5. Kautschukmischung nach einem der Ansprüche 1 bis 3, dadurch gekennzeichnet, daß die Cellulosefasern Kokosfasern oder Baumwollfasern sind.

6. Kautschukmischung nach einem der Ansprüche 1 bis 5, dadurch gekennzeichnet, daß Fasern einer Länge von 0,5 bis 30 mm, insbesondere 5 bis 10 mm, beigemengt werden.

7. Reifen, dessen Laufstreifen zumindest zum Teil aus einer vulkanisierten Kautschukmischung nach einem der Ansprüche 1 bis 6 besteht.

8. Reifen nach Anspruch 7, dadurch gekennzeichnet, daß der Reifen ein Winterreifen ist.

## Claims

1. Rubber mixture for the tread strip of a tyre, characterised in that a fibrous composition, comprising cellulose fibres and keratin fibres in a weight ratio in the range of between 1:5 and 5:1, is added to the rubber mixture.

2. Rubber mixture according to claim 1, characterised in that a fibrous composition, comprising cellulose fibres and keratin fibres in a weight ratio in the range of between 3:7 and 2:1, is added to the rubber mixture.

3. Rubber mixture according to claim 1 or 2, characterised in that the proportion of the fibrous composition is between 2 and 25 parts by weight, more especially between 5 and 15 parts by weight, relative to 100 parts by weight rubber in the mixture.

4. Rubber mixture according to at least one of the preceding claims, characterised in that the keratin fibres are wool fibres or hairs, more especially animal hairs or animal bristles.

5. Rubber mixture according to one of claims 1 to 3, characterised in that the cellulose fibres are coconut fibres or cotton fibres.

6. Rubber mixture according to one of claims 1 to 5, characterised in that fibres having a length of between 0.5 and 30 mm, more especially between 5 and 10 mm, are added.

7. Tyre, the tread strip of which is formed, at least partially, from a vulcanised rubber mixture according to one of claims 1 to 6.

8. Tyre according to claim 7, characterised in that the tyre is a winter tyre.

## Revendications

1. Composition de caoutchouc pour la bande de roulement d'un pneumatique,
caractérisée en ce que,
la composition de caoutchouc est mélangée avec une composition fibreuse, constituée de fibres de cellulose et de fibres de kératine dans un rapport en poids dans l'intervalle de 1:5 à 5:1.

2. Composition de caoutchouc selon la revendication 1, caractérisée en ce que la composition de caoutchouc est mélangée avec une composition fibreuse, constituée de fibres de cellulose et de fibres de kératine dans un rapport en poids dans l'intervalle de 3:7 à 2:1.

3. Composition de caoutchouc selon la revendication 1 ou 2, caractérisée en ce que le titre de la composition fibreuse se monte à 2 à 25 parties en poids, en particulier à 5 à 15 parties en poids, par rapport à 100 parties en poids de caoutchouc dans la composition.

4. Composition de caoutchouc selon au moins une des revendications précédentes, caractérisée en ce que les fibres de kératine sont des crins de laine, des poils, en particulier des poils d'animaux ou des crins d'animaux.

5. Composition de caoutchouc selon l'une des revendications 1 à 3, caractérisée en ce que les fibres de cellulose sont des fibres de coco ou de la soie de coton.

6. Composition de caoutchouc selon l'une des revendications 1 à 5, caractérisée en ce que les fibres sont mélangées à une longueur de 0,5 à 30 mm, en particulier de 5 à 10 mm.

7. Pneumatiques dont la bande de roulement est au moins partiellement constituée d'une composition de caoutchouc vulcanisée selon l'une des revendications 1 à 6.

8. Pneumatiques selon la revendication 7, caractérisés en ce que le pneumatique est un pneu neige.
